# EUROPEAN PATENT APPLICATION

(11) **EP 2 012 053 A1**
(43) Date of publication of application: **07.01.2009**
(21) Application number: 07714943.3
(22) Date of filing: 26.02.2007
(51) Int. Cl.: F16N 7/38, B41F 13/00, F16H 57/04, F16N 25/02

(54) **OIL SUPPLY DEVICE, PRINTING MACHINE, OIL SUPPLY METHOD, AND COMPUTER PROGRAM FOR OIL SUPPLY**

(30) Priority: 27.04.2006 JP 2006123554
(71) Applicant: Mitsubishi Heavy Industries, Ltd., Minato-ku Tokyo 108-8215 (JP)
(72) Inventor: KAWAI, Keisuke, c/o Mitsubishi Heavy Industries, Ltd., Tokyo 108-8215 (JP)
(74) Representative: HOFFMANN EITLE
(86) International application number: PCT/JP2007/053550
(87) International publication number: WO 2007/125678

(57) **Abstract**

An object is to supply a fixed amount of oil determined in advance. In the present invention, a lubricating device that supplies oil to each sliding device of a printing machine includes a lubricating section and a metered valve. The lubricating section ejects oil in an oil reservoir section into a piping when lubrication is performed. The metered valve is configured to eject oil accumulated in an ejection side cylinder chamber from an ejection opening by oil pressure from the oil ejected into the piping. The oil ejected into the piping is accumulated in a supply side cylinder chamber. When a lubricating pump is stopped and depressurized, the oil accumulated in the supply side cylinder chamber moves to the ejection side cylinder chamber.

## Description

### TECHNICAL FIELD

The present invention relates to a lubrication system and a printing machine.

### BACKGROUND ART

Conventionally, grease is supplied to each section of a printing device to reduce sliding load and the like. Each section of the printing device includes, for example, a bearing on a swing device that accelerates to a printing speed when a sheet of paper is fed from a paper feeding section to a printing section, a front stopper driving section, a paper feeding cam section, and the like.

Patent Document 1: Japanese Utility Model Application Laid-open No. S60-551

### DISCLOSURE OF INVENTION

### PROBLEM TO BE SOLVED BY THE INVENTION

However, in a lubricating device in Patent Document 1, a disclosure is not made regarding control of lubrication amount. In some instances, oil is excessively supplied to each device. Therefore, excess oil spatters from each device that operates during printing, soiling a printed material.

The invention has been achieved in light of the above-described issues. An object of the invention is to provide a lubricating device, a printing machine, a lubricating method, and a computer program for lubrication that can supply an appropriate amount of oil.

### MEANS FOR SOLVING PROBLEM

To solve the problems and achieve the object, a lubricating device that supplies oil to each sliding device of a printing machine, comprises: a lubricating unit that ejects oil from an oil reservoir into a piping when lubrication is performed; and a metered valve that ejects a fixed amount of oil onto a sliding unit to be lubricated by oil pressure of the oil ejected into the piping.

In the invention, the piping in the lubricating device is provided with the metered valve. As a result, each sliding device can be supplied with an appropriate fixed amount of oil. Therefore, spattering of oil in the printing device during printing caused by an excessive supply of oil and soiling of a printed material caused by the spattering of oil can be suppressed.

In the lubricating device according to a next invention, in addition to the previously mentioned invention, the metered valve ejects the oil accumulated in an ejection side cylinder chamber from an ejection opening by the oil pressure of the oil ejected into the piping and the oil ejected into the piping is accumulated in a supply side cylinder chamber, and when the lubricating unit is stopped and depressurized, the oil accumulated in the supply side cylinder chamber moves to the ejection side cylinder chamber.

In the invention, the metered valve is configured such that, even when the oil is ejected once from the metered valve by an operation performed by the lubricating section, the lubricating section stops and becomes decompressed. As a result, the ejection side cylinder is supplied with the oil without requiring another operation. Therefore, operation efficiency can be enhanced.

In the lubricating device according to a next invention, in addition to the previously mentioned invention, regarding the oil ejected into the piping from the lubricating unit, the oil ejected from the lubricating unit is distributed to a plurality of pipings by a distributor that distributes to sliding units to be lubricated, and the metered valve is provided on tips of the plurality of pipings on the sliding unit side.

In the invention, the distributor distributes the oil to a plurality of pipings. Therefore, a plurality of points can be simultaneously lubricated.

In the lubricating device according to a next invention, in addition to the previously mentioned invention, a lubrication operation is controlled by an optimal lubrication time controlling device including: an actual elapsed operation time counting unit that counts an actual elapsed operation time of the printing machine; and a notification controlling unit that compares the actual elapsed operation time counted by the actual elapsed operation time counting unit and an optimal lubrication time set in advance and, when the actual elapsed operation time exceeds the optimal lubrication time, gives a notification that lubrication is required.

In the invention, the actual elapsed operation time is counted. When the optimal lubrication time set in advance is reached, the notification is given. As a result, instances in which the operator forgets to perform lubrication can be suppressed.

In the lubricating device according to a next invention, in addition to the previously mentioned invention, a lubrication operation is controlled by a forced lubrication controlling device including: an actual elapsed operation time counting unit that counts an actual elapsed operation time of the printing machine; and a notification controlling unit that compares the actual elapsed operation time counted by the actual elapsed operation time counting unit and a critical time set in advance and, when the actual elapsed operation time exceeds the critical time, forces lubrication to be performed after the printing machine stops printing.

In the invention, the actual elapsed operation time is counted. When the critical time set in advance is reached, lubrication is forcibly performed. As a result, the oil can be supplied before the sliding section runs out of oil and seizes.

The lubricating device according to a next invention, in addition to the previously mentioned invention, comprises a lubrication controlling device including the optimal lubrication time controlling device and the forced lubrication controlling device.

In the invention, the actual elapsed operation time is counted. When the optimal lubrication time set in advance is reached, the notification is given. As a result, instances in which the operator forgets to perform lubrication can be suppressed. Moreover, the oil can be supplied before the sliding section runs out of oil and seizes.

In the lubricating device according to a next invention, in addition to the previously mentioned invention, the metered valve is provided with a metered valve pressure sensor that detects whether the metered valve is operating normally, and a metered valve notifying unit is provided that compares a pressure value based on a signal from the metered valve pressure sensor and a metered valve pressure threshold set in advance, and gives a notification when the pressure value based on the signal from the metered valve pressure sensor is less than the metered valve pressure threshold.

The invention includes the metered valve pressure sensor. As a result of a configuration such as this, whether the metered valve is operating normally can be easily judged.

In the lubricating device according to a next invention, in addition to the previously mentioned invention, the piping is provided with a piping pressure sensor that measures pressure within the piping, and a notifying unit is provided that compares a pressure value based on a signal from the piping pressure sensor and a piping pressure threshold set in advance, and gives a notification when the pressure value based on the signal from the piping pressure sensor is less than the piping pressure threshold.

In the invention, the piping is provided with a pressure sensor. As a result of a configuration such as this, that the piping may be damaged can be easily discovered.

According to a next invention, a printing machine including a paper feeding unit, a printing unit, and a paper discharging unit, comprises the lubricating device that lubricates the sliding units of the printing machine.

The printing machine includes the above-described lubricating device. Therefore, as a result of effects of the lubricating device, operational load placed on the operator can be reduced.

According to a next invention, a lubricating method comprises the steps of: counting an actual elapsed operation time during which a printing machine is printing; comparing an actual elapsed printing time and an optimal lubrication time set in advance; and giving a notification when the actual elapsed printing time exceeds the optimal lubrication time.

In the invention, the actual elapsed operation time is counted. When the optimal lubrication time set in advance is reached, the notification is given. As a result, instances in which the operator forgets to perform lubrication can be suppressed.

According to a next invention, a lubricating method comprises the steps of: counting an actual elapsed operation time during which a printing machine is printing; comparing an actual elapsed printing time and a critical time set in advance; and forcibly supplying a fixed amount of oil after the printing machine stops printing, when the actual elapsed printing time exceeds the critical time.

In the invention, the actual elapsed operation time is counted. When the critical time set in advance is reached, lubrication is forcibly performed. As a result, the oil can be supplied before the sliding section runs out of oil and seizes.

In the lubricating method according to a next invention, in addition to the previously mentioned method, when the actual elapsed printing time exceeds a critical time, a fixed amount of oil is forcibly supplied after the printing machine stops printing.

In the lubricating method, the actual elapsed operation time is counted. When the critical time set in advance is reached, lubrication is forcibly performed. As a result, the oil can be supplied before the sliding section runs out of oil and seizes.

According to a next invention, a computer program allows a computer to execute the previously mentioned lubricating method.

In the computer program for lubrication, the computer can be allowed to perform the above-described lubricating method.

### EFFECT OF THE INVENTION

In the lubricating device, the printing machine, the lubricating method, and the computer program for lubrication of the invention, an appropriate amount of oil can be supplied.

### BRIEF DESCRIPTION OF DRAWINGS

[Fig. 1] Diagram of a lubricating device.
[Fig. 2A] Diagram of an operation of a metered valve.
[Fig. 2B] Diagram of the operation of the metered valve.
[Fig. 2C] Diagram of the operation of the metered valve.
[Fig. 2D] Diagram of the operation of the metered valve.

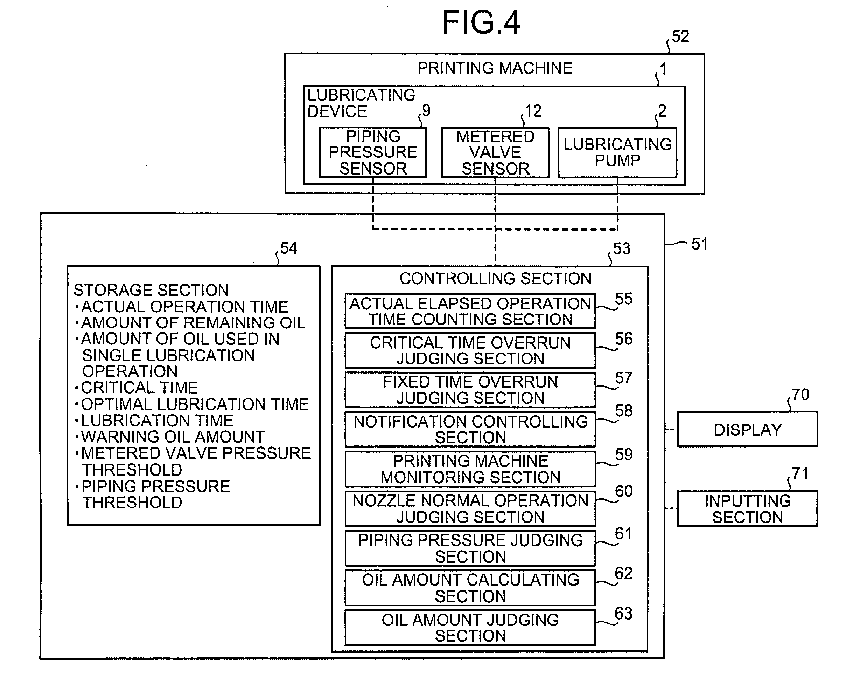

[Fig. 3] Flowchart related to control of the lubricating device. [Fig. 4] Functional block diagram related to the control of the lubricating device.

### EXPLANATIONS OF LETTERS OR NUMERALS

- 1: lubricating device
- 2: lubricating pump
- 3: first piping
- 4: second piping
- 5: main distributor
- 6: third piping
- 7: sub distributor
- 8: metered valve
- 9: metered valve sensor
- 12: piping pressure sensor
- 13: oil reservoir section
- 51: lubrication controlling device
- 52: printing machine
- 53: controlling section
- 54: memory
- 55: actual elapsed operation time counting section
- 56: critical time overrun judging section
- 57: optimal lubrication time overrun judging section
- 58: notification controlling section
- 59: printing machine monitoring section
- 60: metered valve normal operation judging section
- 61: piping pressure judging section
- 62: oil amount calculating section
- 63: oil amount judging section
- 101: cylinder
- 102: supply opening
- 102a: stepped section of supply opening
- 104: ejection opening
- 106: pipe
- 106a: pipe entrance
- 108: spring
- 110: check valve
- 111: lip
- 112: tip circumference
- 113a: outer seal surface 113a
- 114a: inner seal surface
- 115: supply-end cylinder chamber
- 116: ejection-end cylinder chamber
- 117: through-hole
- 118: stopper
- 119: fixed end section
- 120: piston
- 200: printing machine
- 201: oil bath interior
- 202,: 206 pipings
- 203: pump
- 204: inlet port
- 205: ejection opening
- 207: distributor
- 208: distributor group
- 209: coaxial bearing
- 210: lubricating device

### BEST MODE(S) FOR CARRYING OUT THE INVENTION

The present invention will be described in detail below with reference to the drawings. The invention is not limited by the best mode for carrying out the invention (hereinafter, embodiment). Constituent elements according to the embodiment below include those that can be easily conceived by a person skilled in the art or those that are substantially the same.

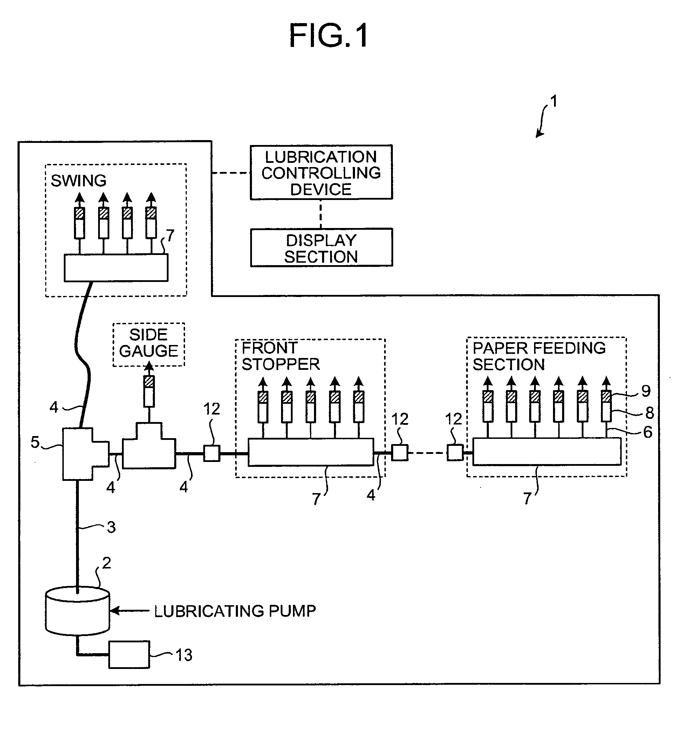

Fig. 1 is a diagram of an overall configuration of a lubricating device according to an embodiment of the present invention. A lubricating device 1 includes a lubricating pump (lubricating section) 2, a main distributor 5, and sub distributors 7. The lubricating pump 2 pumps oil from an oil reservoir section 13 and ejects the oil into a first piping 3. The main distributor 5 distributes the ejected oil to a plurality of second pipings 4. The sub distributors 7 are provided in the second pipings 4 that extend to vicinities of sliding devices of a printing machine requiring a supply of oil. The sub distributors 7 further distribute the oil to a plurality of third pipings 6.

Respective sliding device side ends of the third pipings 6 have a metered valve 8. When the lubricating pump 2 is operated, a fixed amount of oil is ejected from the metered valve 8 as a result of pressure from the oil ejected from the lubricating pump 2 via the main distributor 5, the sub distributors 7, and respective first piping 3, second pipings 4 and third pipings 6.

According to the embodiment, sliding devices requiring lubrication are a bearing of a swing device that accelerates to a printing speed when a sheet of paper is supplied from a paper supplying section to a printing section, a front stopper for the sheet of paper, a driving section, and a paper feeding can section. Each sliding device or sliding section is supplied with the fixed amount of oil from a tip of the metered valve 8. However, the metered valve 8 is not limited to the sliding devices, but can be provided accordingly to devices and sections requiring lubrication. At least the issues of the present invention can be solved as long as the lubricating device is provided with the lubricating section, a piping through which the oil ejected from the lubricating section passes, and a metered valve provided on the tip of the piping.

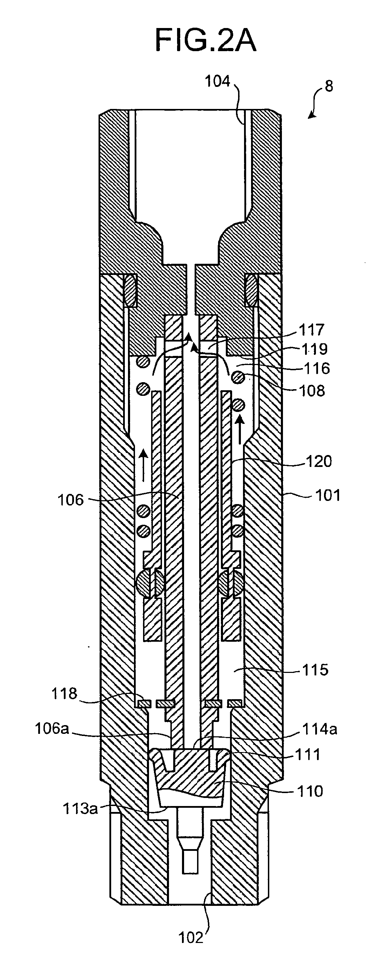

Fig. 2A to Fig. 2D are cross-sectional views of the metered valve in the lubricating device of the present invention. The metered valve 8 according to the embodiment is a type in which the fixed amount of oil is ejected by a single instance of pressurization. Here, the metered valve is described. First, as shown in Fig. 2A, when the oil is supplied from a supply opening 102 of a cylinder 101, a check valve 110 moves towards an ejection opening 104 by pressure from the oil being supplied. The check valve 110 closes an entrance 106a of a pipe 106, which is connected to the ejection opening 104, with an inner seal surface 114a, and a lip 111 contracts inwards to allow the oil to pass.

A piston 120 is configured to press towards the supply opening 102 by a spring 108. The oil passing between the lip 111 and an inner surface of the cylinder 101 applies pressure to the piston 120 against a biasing force of the spring 108. As a result of the pressure, a supply end cylinder chamber is formed and the oil is accumulated.

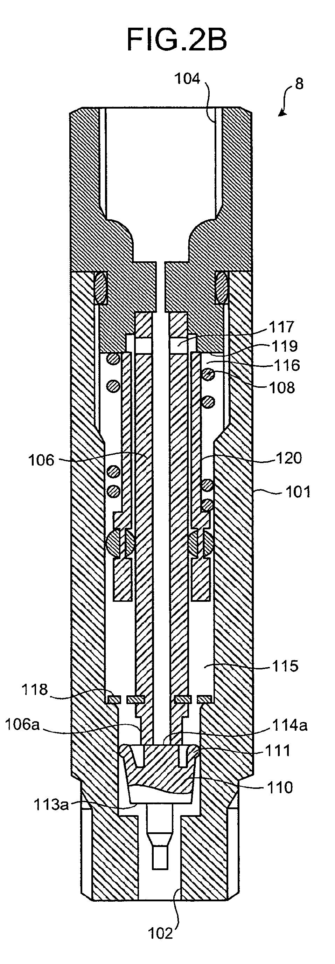

As shown in Fig. 2B, as a result of the pressure applied to the piston 120, the oil accumulated in an ejection end cylinder chamber 116 is pushed out from a through-hole 117 and ejected from the ejection opening 104. Subsequently, ejection ends when an end section on the ejection opening 104 side of the piston 120 comes into contact with a fixed end section 119 of the pipe 106 and stops. As a result, oil is ejected of an amount for the piston 120 stroke.

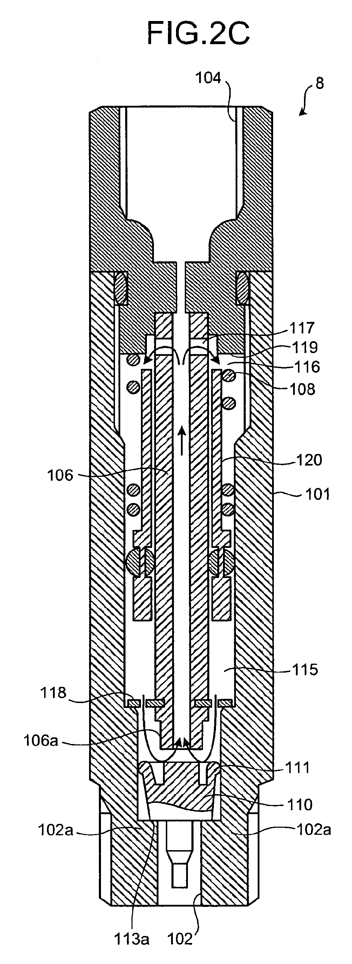

Then, when the oil stops being supplied and there is no oil pressure, as shown in Fig. 2C, the piston 120 is pressed towards the supply opening 102 side by the biasing force of the spring 108. As a result of the piston 120 being pressed, pressure works on the oil accumulated in a supply side cylinder chamber 115, and the check valve 110 moves to the supply opening 102 side. A step section 102a on the supply opening 102 side is sealed by an outer seal surface 113a. The lip 111 opens and a tip circumference 112 comes into contact with an inner wall of the cylinder 101 and seals the cylinder 101, stopping the oil from flowing to the supply opening 102 side.

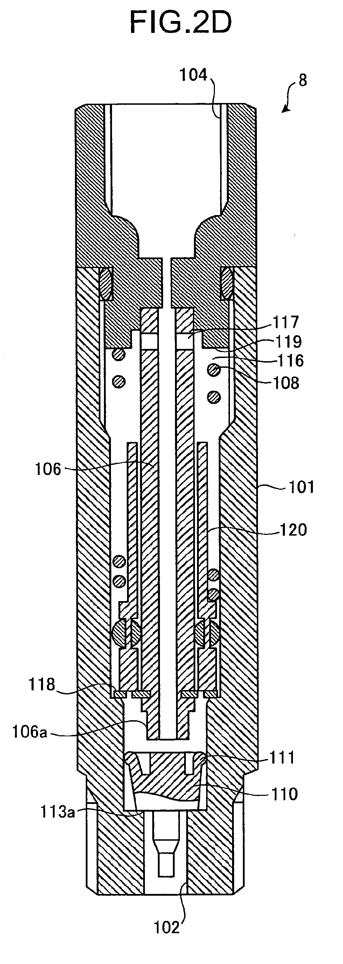

Next, the oil accumulated in the supply side cylinder chamber 115 passes through a hole in a stopper 18 and flows from the entrance 106a of the pipe 106. The ejection side cylinder chamber 116 becomes negatively pressurized as a result of the movement of the piston 120. Therefore, the oil flows from the through-hole 117 on the ejection opening 104 side of the pipe 106 to the ejection side cylinder chamber 116 and the oil is accumulated as oil for a next ejection. In addition, as shown in Fig. 2D, the piston 120 comes into contact with a stopper 118 provided on the supply opening 102 side of the pipe 106. Operations such as these are repeated, and the fixed amount of oil is ejected from the ejection opening 104.

Next, operations performed by the lubricating device according to the embodiment will be described with reference to Fig. 1. First, respective first piping 3, second pipings 4, third pipings 6, and metered valves 8 are filled with the oil in advance. Then, when lubrication is required, an operator operates the lubricating pump 2. Alternatively, a lubrication controlling device control can be performed, and the lubricating pump can be operated when a certain amount of time has elapsed.

When the lubricating pump 2 operates, the lubricating pump 2 extracts the oil from the oil reservoir section 13 and ejects the oil into the first piping 3. The ejected oil pushes out the oil filling the first piping 3 into the main distributor 5. The oil filling the main distributor 5 is pushed out into the plurality of second pipings 4. As a result of the oil pushed out into the second pipings 4, the oil in the sub distributors 7 is pushed out into the third pipings 6. The oil filling the third pipings 6 is supplied to the metered valves 8. As a result of an effect of the above-described metered valve 8, a fixed amount of oil is ejected from the metered valves 8 and supplied to respective sliding sections.

When ejection of the fixed amount of oil from each metered valve 8 is completed, the operation of the lubricating pump 2 is stopped by the operator or the lubrication controlling device control. When the lubricating pump 2 stops, there is no oil pressure. The oil flows into an ejection side cylinder chamber 16 of the above-described metered valve. The oil is accumulated as the oil for the next ejection. Preparation is made for a next lubrication.

According to the above-described embodiment, an appropriate amount of oil determined in advance is supplied to each sliding section. Therefore, instances can be suppressed in which an excessive amount of oil is supplied to each sliding section and, when the printing machine is operated, the oil spatters and soils a printed material as a result of the operation of the printing machine.

A required amount of oil differs with each sliding section. Therefore, metered valves corresponding to each sliding section are preferably used such that an amount of oil corresponding to an amount of oil required for each sliding section can be ejected. For example, for the swing, a metered valve that can supply four milliliters of oil in a single ejection operation is used. For the front stopper, a metered valve that can supply two milliliters of oil in s single ejection operation is used. In this way, the metered valve is selected accordingly in adherence to the sliding device to which the oil is supplied. As a result of the metered valve corresponding to each sliding section being selected in this way, the oil can be supplied to each sliding section without excess or deficiency. Therefore, spattering of oil from each sliding section during printing caused by an excessive amount of oil being supplied and seizing of each sliding section caused by an insufficient amount of oil being supplied can be suppressed.

According to the embodiment, the metered valve is used. Therefore, an amount of oil supplied during a single lubrication operation can be determined by a total sum of the amount supplied to each metered valve being determined. From the perspective of an oil reservoir section, because the amount of oil used during a single lubrication operation can be known, an amount of oil remaining in the oil reservoir section and a number of times the lubrication operation can be performed can be judged through subtraction of the amount of oil supplied from the amount of oil provided in the oil reservoir section in advance.

For example, the amount of oil in the oil reservoir section can be inputted in advance in a lubrication controlling device 53. Every time the lubrication operation is performed, an amount of oil used for a single lubrication operation can be subtracted from the amount of oil in the oil reservoir section. When the amount of oil in the oil reservoir section becomes less than a certain amount, an operator can be notified by a message being displayed on a display that is a display section. As a result, instances can be prevented in which the oil is not supplied even when the lubrication operation is being performed, because the oil reservoir section does not have oil. Therefore, instances can be prevented in which each sliding device seizes and breaks as a result of the oil not being supplied to each sliding device.

Each metered valve 8 can be provided with a metered valve sensor 9 for detecting whether the metered valve 8 is operating and ejecting oil normally. A signal from the metered valve sensor 9 is inputted to a lubrication controlling device 51. Based on the signal from the metered valve sensor 9, the lubrication controlling device 51 judges whether the metered valve 8 is operating normally. When the lubrication controlling device 51 judges that the metered valve 8 is malfunctioning, a display 11 is notified that a malfunction has occurred, thereby notifying the operator.

As a result, the operator is not required to check whether the metered valve 8 is operating normally through a manual operation. Moreover, a malfunctioning metered valve 8 can be detected at an early stage, and whether to exchange the metered valve 8 with a new metered valve can be judged. In other words, because the malfunctioning metered valve 8 can be exchanged with a normal valve at an early stage, each sliding device can be prevented in advance from seizing and breaking because of oil supply deficiency resulting from continued use of the malfunctioning metered valve 8. In addition to a pressure sensor, the above-described metered valve sensor 9 can be a sensor that can mechanically detect that the metered valve 8 is operating.

In addition, a configuration can be used in which the first piping 3, the second pipings 4, and the third pipings 6 are provided with a piping pressure sensor 12 that detects oil pressure within the piping. The lubrication controlling device 51 can monitor a signal from the piping pressure sensor 12. During the lubrication operation, pressure within the piping rises to a certain value. However, when the piping is damaged as a result of a hole formed in the piping or the like, the oil leaks from a damaged area. Therefore, the pressure within the piping stops rising. As a result, the oil may not be supplied any further than a section in which the hole is formed.

Therefore, a configuration is used in which the pressure within the piping is monitored by the lubrication controlling device 51 or the like using the piping pressure sensor 12. When the pressure does not rise to the certain value during the lubrication operation, the lubrication controlling device notifies the operator by sending a message to a display 70 or the like. As a result, when the pressure within the piping drops below than the certain value, the operator can judge where within the piping the damage may have occurred. The operator can find the damaged area and perform repairs and the like.

For example, if it is known from information obtained from the piping pressure sensor that pressure within a second piping 4 and a third piping has not increased and pressure in the first piping has increased, it can be known that damage may have occurred between the first piping and the second piping.

When a type of oil being supplied is required to be changed depending on the sliding section requiring lubrication, oil of a type appropriate for each sliding section can be supplied by a plurality of the above-described lubricating devices 1 being provided. The oil used according to the embodiment is preferably grease. Grease has high viscosity. Therefore, the grease does not easily spatter from each sliding device even when the printing machine is operated.

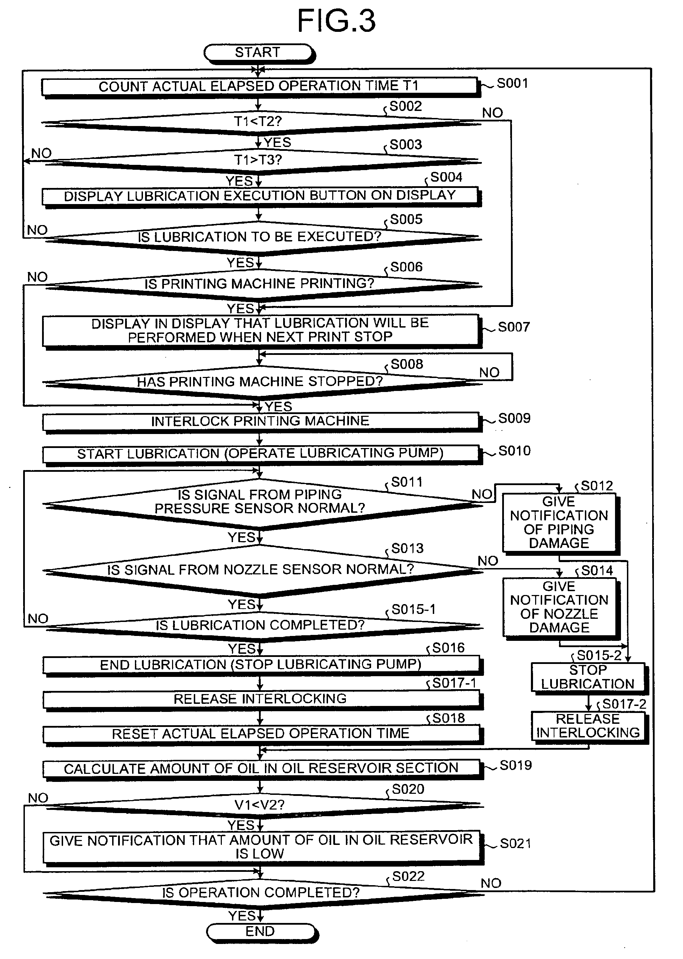

Next, a control operation of the above-described lubricating device 1 will be described using a flowchart in Fig. 3 and a functional block diagram of the lubricating controlling device. First, when a printing machine 52 is turned on, the printing machine 52 is controlled in adherence to the flowchart shown in Fig. 3.

First, an actual elapsed operation time counting section 55 provided in the controlling section 53 of the lubrication controlling device 51 counts time over which printing is actually performed as an actual elapsed printing time (Step S001). The actual elapsed operation time is successively stored in the memory 54. Therefore, when the printing machine is turned off, and the printing machine 52 is turned on again and printing is performed, the actual elapsed operation time counting section 55 of the lubrication controlling device 51 can retrieve the actual elapsed operation time from the memory 54 and start counting from a previous actual elapsed operation time. Here, the lubrication controlling device 51 is, for example, a computer. The computer includes a storage section and a controlling section.

Next, a critical time overrun judging section 56 that is a portion of a forced lubrication controlling device judges whether the actual elapsed operation time added by the actual elapsed operation time counting section 55 has not exceeded a critical time T2 stored in the memory 54. When an actual elapsed operation time T1 exceeds the critical time T2 (Yes at Step S002), the control operation proceeds to Step S007. When the actual elapsed operation time does not exceed the critical time T2 (No at Step S002), the control operation proceeds to Step S003.

Here, each sliding section of the printing machine 52 is required to be periodically lubricated. When the printing machine 52 prints continuously for a certain amount of time without lubrication, the sliding sections requiring lubrication run out of oil. The sliding sections may seize or become damaged. Therefore, the critical time T2 is set to a time that is a certain fixed safe time subtracted from an actual elapsed operation time at which risk is present of the sliding section requiring lubrication running out of oil and seizing as a result of continuous operation performed without lubrication. Therefore, when the actual elapsed operation time T1 exceeds the critical time T2, the operation proceeds to Step S007 to forcibly lubricate the sliding section next time the printing is stopped.

Next, an optimal time overrun judging section 57 that is a portion of an optimal lubrication time controlling device and a optimal lubrication time overrun judging section 57 of the controlling section 53 judges whether the actual elapsed operation time T1 exceeds an optimal lubrication time T3 set in advance in the memory 54 is judged by (Step S003).

Then, when the actual elapsed operation time T1 exceeds the optimal lubrication time T3 (Yes at Step S003), a notification controlling section 58 displays a lubrication executing button on the display 70, the lubrication executing button indicating that lubrication is required (Step S004). When the actual elapsed operation time T1 does not exceed the optimal lubrication time T3 (No at Step 003), an actual elapsed operation time counting section 65 counts the actual elapsed operation time (Step S001).

Here, the optimal lubrication time T3 refers to an optimal time indicating that the lubrication should be performed when the actual elapsed operation time T1 reaches a certain time. The optimal lubrication time T3 can be set in adherence to the printing machine and the sliding sections.

Next, input of whether to perform the lubrication is made from the inputting section. When the lubrication is not performed (No at Step 005), the control operation returns to Step S001 such as to judge whether the actual elapsed operation time T1 reaches the optimal lubrication time T3 again (Step S003) or exceeds the critical time T2 (Step S002). When lubrication execution is selected through the inputting section, the control operation proceeds to Step S006.

The controlling section 53 of the lubrication controlling device 51 judges whether the printing machine 52 is printing or not using a printing machine monitoring section 59, based on the signal sent from the printing machine 52 (Step S006). When the printing operation is being performed (Yes at Step S006), that the lubrication will be performed the next time the printing stops will be displayed on the display 70 by the notification controlling section (Step S0007).

Next, the controlling section 53 waits until the printing stops (No at Step S008). When the printing performed by the printing machine 52 stops (Yes at Step S008), the controlling section 53 interlocks the printing machine (Step S009). When the controlling section 53 judges that the printing machine has stopped (No at Step S006), the controlling section 53 interlocks the printing machine without proceeding to Step S007 and S008 (Step S009).

Here, whether the printing is being performed is judged because the oil being supplied may spatter and soil the printed material when the lubrication is performed while the printing machine 52 is printing. The printing machine 52 is interlocked because the oil being supplied may spatter and soil the printed material if the printing machine 52 is operated and the printing starts during lubrication.

After the printing machine 52 is interlocked, the controlling section 53 sends a signal to the lubricating pump and operates the lubricating pump to start lubrication (Step S010). In other words, the controlling section 53 operates the lubricating pump 2, pumps the oil from the oil reservoir section 13, and ejects the oil into the first piping 3.

During the lubrication, the metered valve sensor 9 and the piping pressure sensor 12 operate. Respective signals are inputted into the controlling section 53 of the lubrication controlling device 51. The piping pressure judging section 61 of the controlling section 53 judges whether the first piping 3, the second pipings 4, and the third pipings 6 are damaged based on whether a pressure value based on the signal from the piping pressure sensor 12 is higher or lower that a piping pressure threshold stored in advance in the storage section 54 (Step S011).

Then, when the pressure value based on the signal from the piping pressure sensor 12 is lower than the piping pressure threshold stored in the storage section 54 in advance (No at Step S011), the piping pressure judging section 61 judges that the first piping 3, the second pipings 4, and the third pipings 6 may be damaged. The piping pressure judging section 61 notifies the operator via the display 70 (Step S012) that any of the first piping 3, the second pipings 4, and the third pipings 6 is damaged. The lubrication is stopped (Step S015-2) and the interlocking is released (Step S017-2).

When the pressure value based on the signal from the piping pressure sensor 12 is higher than the piping pressure threshold stored in the memory 54 in advance (Yes at Step S011), a metered valve normal operation judging section 60 of the controlling section 53 judges whether the metered valve 8 is operating normally based on whether the pressure value based on the signal from the metered valve sensor 9 is higher or lower than a metered valve sensor signal threshold stored in the memory 54 in advance (Step S013).

Then, when the pressure value based on the signal from the metered valve sensor 9 is lower than the metered valve pressure threshold stored in the memory 54 in advance (No at Step S013), the metered valve normal operation judging section 60 judges that the metered valve 8 may not be operating normally. The notification controlling section notifies the operator, via the display, that the metered valve 8 may be broken (Step S014) . The controlling section 53 then stops the lubrication (Step S015-2) and releases the interlocking (Step S017-2).

Here, whether the pressure value based on the signal from the piping pressure sensor is normal (Step S011) is judged before judging whether the pressure value based on the signal from the metered valve sensor is normal (Step S013) because, unless the pressure within the piping rises, the pressure within the metered valve provided on the end of the piping does not rise. When whether the pressure value based on the signal from the metered valve sensor is normal is performed first, the metered valve is judged to be abnormal, and the lubrication is stopped (Step S015-2), whether the metered valve is abnormal or the piping is abnormal cannot be judged.

On the other hand, as according to the embodiment, when whether the pressure value based on the signal from the piping pressure sensor is normal (Step S011) is judged first and the signal from the metered valve sensor is abnormal (No at Step S013), it can be judged that the piping is not damaged and the metered valve is abnormal.

Furthermore, after the interlocking is released (Step S017-2), the operation proceeds to Step S019 of calculating the amount of oil in the reservoir 13 because, even when the piping or the like is damaged and the lubrication is stopped (Step S015-2), some oil is supplied to the sliding sections. Therefore, the oil in the oil reservoir section 13 is reduced.

If the operation proceeds to control performed at Step S020 without calculating the amount of oil in the oil reservoir 13 (Step S019), the amount of oil is not calculated regardless of the amount of oil in the oil reservoir 13 having actually decreased. Therefore, a judgment may be made that the oil in the reservoir 13 is sufficient based on an amount of oil V1 in the oil reservoir 13 stored in the storage section. As a result, in actuality, it may be recognized that the lubrication is being performed, regardless of the oil not being present in the reservoir section. Therefore, to prevent a situation such as this in which the oil cannot be supplied, the amount of oil in the reservoir is calculated (Step S019).

When the lubricating pump is operated for a lubrication time stored in the storage section 54 of the lubrication controlling device 51 and the lubrication time is reached (Yes at Step S015-1), the controlling section 53 sends a signal to the printing machine 52 to stop the lubricating pump 2. After the lubricating pump 2 is stopped and the lubrication ends (Step S016), the controlling section 53 releases the interlocking (Step S017-1). Damage to the metered valve and damage to the pipings may occur during the lubrication. Therefore, during the lubrication, the judgment at Step S013 and Step S104 is repeated (No at Step S015-1).

The above-described certain lubrication time can be an amount of time until the oil within the cylinder 116 is ejected from ejection openings 104 of all metered valves. In this case, the time differs with a length of the piping, a number of metered valves, temperature, and the like. Therefore, it is preferable that the lubrication time is measured in consideration thereof and the lubrication time is changed as required. Furthermore, through use of sensors that can detect that the metered valves are in operation, the lubricating pump 2 can be stopped after a certain amount of time has elapsed after the sensors have detected the operation of the metered valves.

Next, the actual elapsed operation time T1 stored in the memory 54 of the lubrication controlling device 51 is reset (Step S018) to count the actual elapsed operation time T1 again because the lubrication is completed.

Next, in an oil amount calculating section 62 of the controlling section 53, the amount of oil used during a single lubrication operation is subtracted from the remaining amount of oil V1 in the oil reservoir section 13 stored in the memory and the value is stored again in the memory (Step S019) . Then, an oil amount judging section of the controlling section 53 compares the amount of oil V1 after subtraction and a warning oil amount V2 stored in the memory in advance. When the oil amount judging section judges that the amount of oil after subtraction is less than the warning oil amount V2 (Yes at Step S020), the oil amount judging section notifies the operator, via the display 70, that the amount of oil V1 in the oil reservoir section 13 is low (Step S021).

When the amount of oil V1 in the oil reservoir section 13 becomes low, the oil may not be supplied normally to each sliding section of the printing machine 52. Also, depending on the operator and the like, when the oil is replenished, the amount of remaining oil in the oil reservoir section is required to be newly set via an inputting section 71.

Then, the controlling section prompts operator instruction via the display regarding whether to return to start (No at Step S022) or turn off the lubricating device 1 (Yes at Step S022) and makes the operator input selection via the inputting section. Whether to return to the start (No at Step S022) or to turn off the lubricating device 1 (Yes at Step S022) can be stored as a program in the lubrication controlling device in advance and automatically judged by the controlling section 53.

As a result of the lubricating device 1 and the lubrication controlling device described above being used in the printing machine, operability can be enhanced. The lubricating device of the present invention can be used in a sheet-fed press, a newspaper press, and the like.

The lubricating device that has been described uses the metered valves 8. Therefore, the amount of oil being supplied in a single operation is set and excessive supply of oil can be suppressed. Moreover, the amount of oil ejected from the metered valves 8 can be adjusted by sizes of the ejection side cylinder 116 and the supply side cylinder 115 being changed. Therefore, each sliding device can use the metered valve 8 corresponding to the required amount of oil. As a result, wasteful use of oil can be prevented and excessive supply of oil can be suppressed.

Notification of an abnormality is given using the metered valve sensor 9 and the piping pressure sensor 12. Therefore, when the lubricating device 1 fails, failure can be instantly known. The printing machine 52 is interlocked during lubrication. Therefore, instances can be suppressed in which the printing starts during lubrication and the oil spatters from each sliding section, soiling the printed material. Moreover, the amount of oil in the oil reservoir section is calculated. Notification is given when the amount of oil remaining in the reservoir section is low. Therefore, instances can be suppressed in which the oil reservoir section runs out of oil and lubrication cannot be performed.

### INDUSTRIAL APPLICABILITY

As described above, the lubricating device, the printing machine, the lubricating method, and the computer program for lubrication of the present invention are advantageous for lubricating the sliding sections in the printing machine. In particular, the lubricating device, the printing machine, the lubricating method, and the computer program for lubrication of the present invention are suitable for supplying the sliding sections with a fixed amount of oil.

## Claims

1. A lubricating device that supplies oil to each sliding device of a printing machine, comprising:
a lubricating unit that ejects oil from an oil reservoir into a piping when lubrication is performed; and
a metered valve that ejects a fixed amount of oil onto a sliding unit to be lubricated by oil pressure of the oil ejected into the piping.

2. The lubricating device according to claim 1, wherein the metered valve ejects the oil accumulated in an ejection side cylinder chamber from an ejection opening by the oil pressure of the oil ejected into the piping and the oil ejected into the piping is accumulated in a supply side cylinder chamber, and
when the lubricating unit is stopped and depressurized, the oil accumulated in the supply side cylinder chamber moves to the ejection side cylinder chamber.

3. The lubricating device according to claim 1 or 2, wherein, regarding the oil ejected into the piping from the lubricating unit, the oil ejected from the lubricating unit is distributed to a plurality of pipings by a distributor that distributes to sliding units to be lubricated, and the metered valve is provided on tips of the plurality of pipings on the sliding unit side.

4. The lubricating device according to any one of claims 1 to 3, wherein a lubrication operation is controlled by an optimal lubrication time controlling device including:
an actual elapsed operation time counting unit that counts an actual elapsed operation time of the printing machine; and
a notification controlling unit that compares the actual elapsed operation time counted by the actual elapsed operation time counting unit and an optimal lubrication time set in advance and, when the actual elapsed operation time exceeds the optimal lubrication time, gives a notification that lubrication is required.

5. The lubricating device according to any one of claims 1 to 3, wherein a lubrication operation is controlled by a forced lubrication controlling device including:
an actual elapsed operation time counting unit that counts an actual elapsed operation time of the printing machine; and
a notification controlling unit that compares the actual elapsed operation time counted by the actual elapsed operation time counting unit and a critical time set in advance and, when the actual elapsed operation time exceeds the critical time, forces lubrication to be performed after the printing machine stops printing.

6. The lubricating device according to any one of claims 1 to 3 comprising a lubrication controlling device including the optimal lubrication time controlling device and the forced lubrication controlling device.

7. The lubricating device according to nay one of claims 1 to 6, wherein the metered valve is provided with a metered valve pressure sensor that detects whether the metered valve is operating normally, and
a metered valve notifying unit is provided that compares a pressure value based on a signal from the metered valve pressure sensor and a metered valve pressure threshold set in advance, and gives a notification when the pressure value based on the signal from the metered valve pressure sensor is less than the metered valve pressure threshold.

8. The lubricating device according to any one of claims 1 to 7, wherein the piping is provided with a piping pressure sensor that measures pressure within the piping, and
a notifying unit is provided that compares a pressure value based on a signal from the piping pressure sensor and a piping pressure threshold set in advance, and gives a notification when the pressure value based on the signal from the piping pressure sensor is less than the piping pressure threshold.

9. A printing machine including a paper feeding unit, a printing unit, and a paper discharging unit, the printing machine comprising a lubricating device according to any one of claims 1 to 8 that lubricates the sliding units of the printing machine.

10. A lubricating method comprising the steps of:
counting an actual elapsed operation time during which a printing machine is printing;
comparing an actual elapsed printing time and an optimal lubrication time set in advance; and
giving a notification when the actual elapsed printing time exceeds the optimal lubrication time.

11. A lubricating method comprising the steps of:
counting an actual elapsed operation time during which a printing machine is printing;
comparing an actual elapsed printing time and a critical time set in advance; and
forcibly supplying a fixed amount of oil after the printing machine stops printing, when the actual elapsed printing time exceeds the critical time.

12. A lubricating method according to claim 10, wherein, when the actual elapsed printing time exceeds a critical time, a fixed amount of oil is forcibly supplied after the printing machine stops printing.

13. A computer program allowing a computer to execute a lubricating method according to any one of claims 10 to 12.
